(19) Europäisches Patentamt / European Patent Office / Office européen des brevets

(11) **EP 3 216 771 A1**

(12) # EUROPEAN PATENT APPLICATION

(43) Date of publication:
**13.09.2017 Bulletin 2017/37**

(21) Application number: **16159215.9**

(22) Date of filing: **08.03.2016**

(51) Int Cl.:
**C04B 28/04** *(2006.01)* **C04B 28/12** *(2006.01)*
**C04B 41/50** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicants:
• **Technion Research & Development Foundation Limited**
  **3200000 Haifa (IL)**
• **ITALCEMENTI S.p.A.**
  **24121 Bergamo (IT)**
• **Alma Mater Studiorum -Università di Bologna**
  **40126 Bologna (IT)**

(72) Inventor: **POKROY, Boaz**
**3478610 Haifa (IL)**

(74) Representative: **Boult Wade Tennant**
**Verulam Gardens**
**70 Gray's Inn Road**
**London WC1X 8BT (GB)**

(54) **COMPOSITIONS WITH INCREASED PHOTOCATALYTIC ACTIVITY**

(57) Photocatalytic compositions, comprising a photocatalyst, and a graphenic material are disclosed. Uses of the Photocatalytic compositions and of substrates incorporating same, particularly for reducing a pollution in air, are also disclosed.

EP 3 216 771 A1

**Description**

The work leading to this invention has received funding from the European Community's Seventh Framework Programme (FP7/2007-2013)) under grant agreement n° 604391.

FIELD OF THE INVENTION

The present invention, in some embodiments thereof, relates to photocatalytic compositions, and, more particularly, but not exclusively, to compositions comprising a photocatalyst, and a graphenic material, and uses thereof.

BACKGROUND OF THE INVENTION

Application of $TiO_2$-based photocatalysts to cementitious materials is the subject of many researches in the last two decades.

The application of $TiO_2$-based photocatalysts to cementitious materials is mainly aimed at achieving two goals, the depolluting action due to the oxidation of $NO_x$ present in the atmosphere to $NO^{3-}$ and the self-cleaning effect of the photocatalytic cement surface. As regard to depollution, $NO_x$ emission reduction is a focus of environmental regulations. In Europe the limit values are specified in the European Union (EU) directives (e.g., 2008/50/EC).

As regard to self-cleaning property, it tackles the problem of the preservation of the original appearance of the surface of the building, mainly of the architectural concretes over time and it is much appreciated especially for buildings located in polluted environments, such as urban areas.

Titanium dioxide (also referred to as "titanium oxide") ($TiO_2$), mainly in the form of anatase, has a wide application as photocatalyst for cementitious materials because of its good compatibility with the inorganic matrix and its low cost.

Previous publications have described $NO_x$ removal by $TiO_2$-based photocatalysts-incorporated cement based materials. For the most concern outdoor applications, $TiO_2$, has a large band gap ($\Delta E$), $\Delta E \approx 3.2$ eV, and, as a result, UV light (wavelength <387 nm) is required for its photocatalytic activity. Solar light contains about 4-5% of UV light and for practical reason it is the most convenient source of radiation.

International Patent Application Publication No. WO 2009/013338 discloses photocatalytic compositions, especially useful as paints, renders and plasters, provided with a high photocatalytic power, preferably with a mixture of anatase $TiO_2$ and rutile $TiO_2$.

International Patent Application Publication No. WO 2009/080647 describes a photocatalytic composite comprising a titanium dioxide supported on metakaolin.

In the aforesaid patent applications, the photocatalytic ability of the composition is higher than 80% in term of degree of $NO_x$ oxidation provided that the test lasts enough time, e.g., 60 min.

Unfortunately, in real condition in urban context, recirculation and contact of the same volume of polluted air with the photocatalytic surface of the building is very unlikely, as the urban context is an open environment, where the mechanisms of diffusion of molecules and atoms are continuously present. Moreover, their movements are caused not only by the concentration gradients (Fick diffusion law) but also by the air currents provoked by the wind and the traffic which further reduce the probability of contacts between the molecules of pollutants and the photocatalytic surface.

On earth, the solar radiation varies with the angle of the sun above the horizon, with longer sunlight duration at high latitudes during summer, varying to no sunlight at all in winter near the poles.

Because changes in winter and summer tend to offset, the change in the annual average insolation at any given location is near zero, but the redistribution of energy between summer and winter strongly affects the intensity of seasonal cycles and only at equator the day-length is a constant twelve hours throughout the year.

Besides that, on a diurnal base sunlight varies in intensity from sunrise to sunset and the blue spectral component dominates during twilight before and after sunrise and sunset, respectively, and the red dominates during sunrise and sunset.

Moreover, the part of sunlight spectrum active for photocatalysis is generally limited. Referring to $TiO_2$ it mainly utilizes the small amount of UVA light contained in the solar spectrum.

Cloudstotal are a further factor affecting the intensity of sunlight on Earth. Even on a clear day, about a quarter of the potential radiation is lost by clouds, increasing to half with thicker cloud and arriving to more than ninety percent under a dark thundery sky.

Hence, a key problem to solve, in the application of photocatalysis in cementitious material for outdoor structures and buildings, is to increase the efficacy of the photocatalyst (particularly $TiO_2$-based) to tackle and partially compensate for its limited activity in real conditions caused by the continuous refresh of the polluted air entering in contact with the photocatalytic surface and by the variable sunlight intensity over year and over latitude.

## SUMMARY OF THE INVENTION

The present invention, in some embodiments thereof, relates to photocatalytic compositions, and, more particularly, but not exclusively, to compositions comprising a photocatalyst, and a graphenic material, and uses thereof.

According to an aspect of some embodiments of the present invention, there is provided a composition comprising a photocatalyst, a graphenic material, and a substrate, wherein the photocatalyst, and the graphenic material are incorporated in and/or on at least a portion of the substrate, and wherein the substrate is or comprises one or more materials selected from the group consisting of: paint, render, plaster, cementitious composition, gypsum, rheology modifier, a hydraulic lime, and a hydraulic binder.

In some embodiments, the substrate is a cementitious composition. In some embodiments, the cementitious composition is selected from the group consisting of a paste, a mortar and a concrete.

In some embodiments, the photocatalyst is metal oxide. In some embodiments, the metal oxide is titanium oxide ($TiO_2$). In some embodiments, at least 80% of the $TiO_2$ is in the crystallographic form of anatase. In some embodiments, the $TiO_2$ has a specific surface area are between 10 and 400 $m^2$/g.

In some embodiments, each of the photocatalyst and a graphenic material are less than 10%, by total weight of the composition.

In some embodiments, the graphenic material is selected from the group consisting of: single layer graphene, multi-layer graphene, graphite nanoplatelets, graphite nanosheets, graphite nanoflakes, graphene nanosheets, graphene microsheet, graphene nanoribbon, reduced graphene, and any combination thereof.

In some embodiments, the graphenic material is from 1% to 15%, (w/w) by total weight of the graphenic material and the photocatalyst.

According to an aspect of some embodiments of the present invention, there is provided an article comprising the disclosed composition.

In some embodiments, the article is selected from the group consisting of architectural elements, paving blocks, road surfacing products, ceiling vaults, paving stones, blocks, bricks, monumental elements, extruded products, and tiles.

According to an aspect of some embodiments of the present invention, there is provided a method of photocatalytically decomposing an air pollutant, optionally nitrogen oxide ($NO_x$), the method comprising contacting the pollutant with a composition comprising a photocatalyst and a graphenic material, optionally carried out in the presence of UV light and/or water. In some embodiments, the photocatalyst is $TiO_2$.

In some embodiments, the photocatalyst and the graphenic material act synergistically.

## BRIEF DESCRIPTION OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:

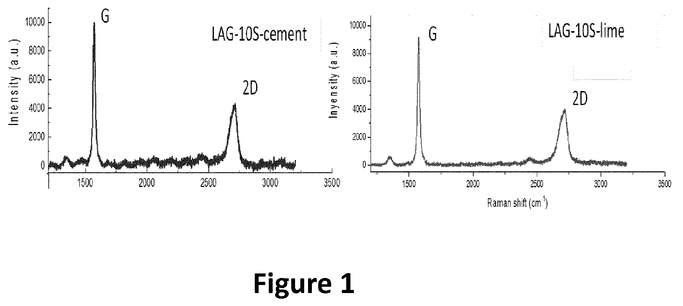

Figure 1 presents Raman spectrum of graphene edge, carried on cement mortar (left panel) and lime mortar (right panel).

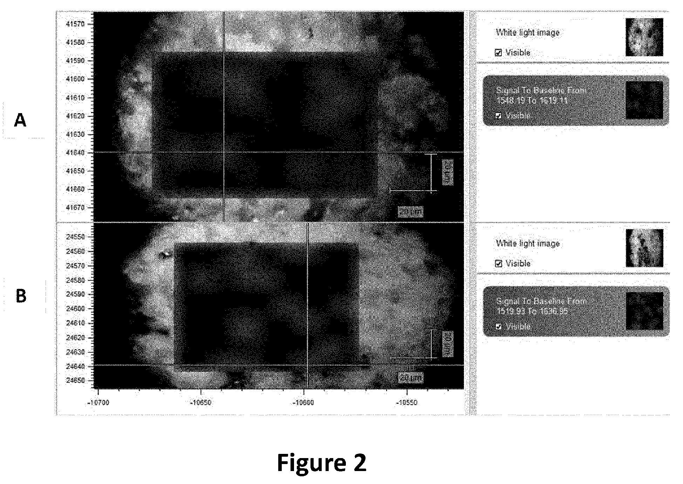

Figure 2 presents graphene mapping of the LAG10S photocatalyst (as described below), as described below, within cement (upper left panel, designated by "A") and lime paste (lower left panel, designated by "B"). The distribution of graphene over the analyzed area is presented in grey color inside the black matrix.

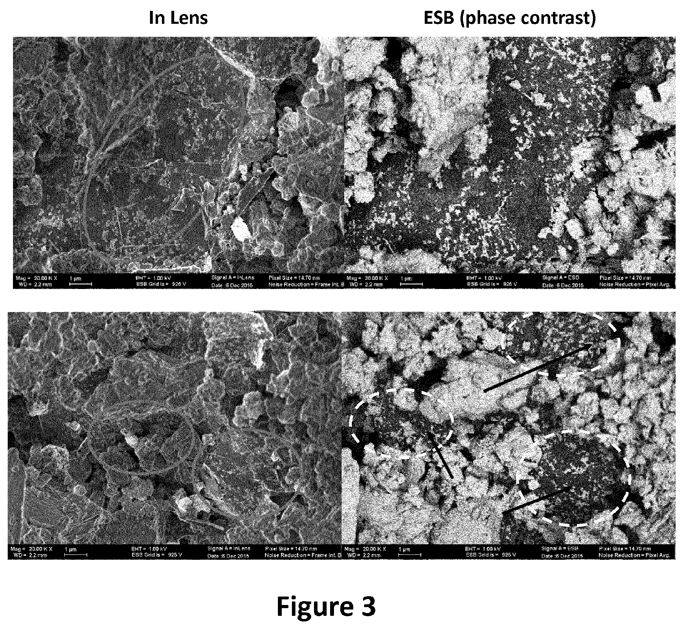

Figure 3 presents images obtained by In lens (left panels) and energy selective backscattered detector (EsB; right panels), demonstrating the morphology of LAG10S-incorporated hydrated cement sample (left panels), and compositional contrast between graphene (darker area; designated by arrows) and cement matrix (right panels).

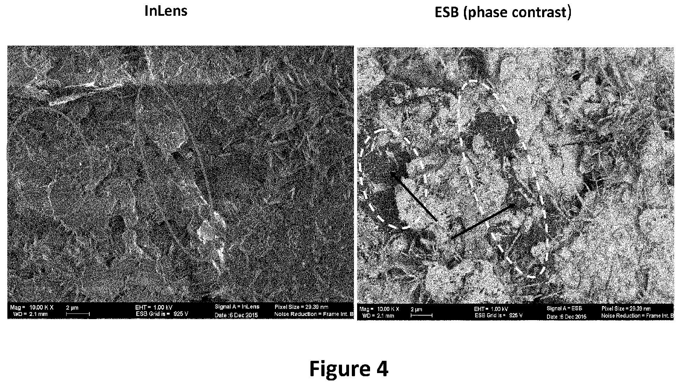

Figure 4 presents images obtained by In lens (left panel) and energy selective backscattered detector (EsB; right panel), demonstrating the morphology of LAG10S-incorporated hydrated lime sample (left panel), and compositional contrast between graphene (darker area; designated by arrows) and hydrated lime matrix (right panel).

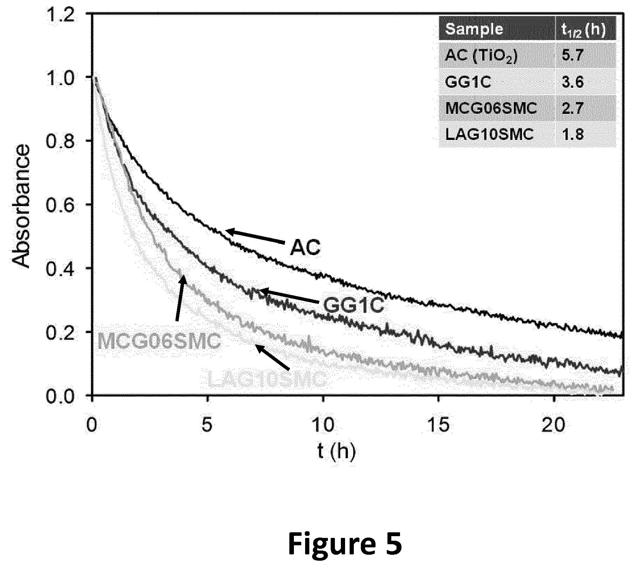

Figure 5 presents graphs demonstrating the photodegradation of Rhodamine B on the top of lime coatings made with photocatalytic additives: AC ($TiO_2$ reference), GG1, MCG06S and LAG10S (as described below) as a function of irradiation time. Inset presents a table reporting the different times in which Rhodamine B adsorption is half of the initial starting value.

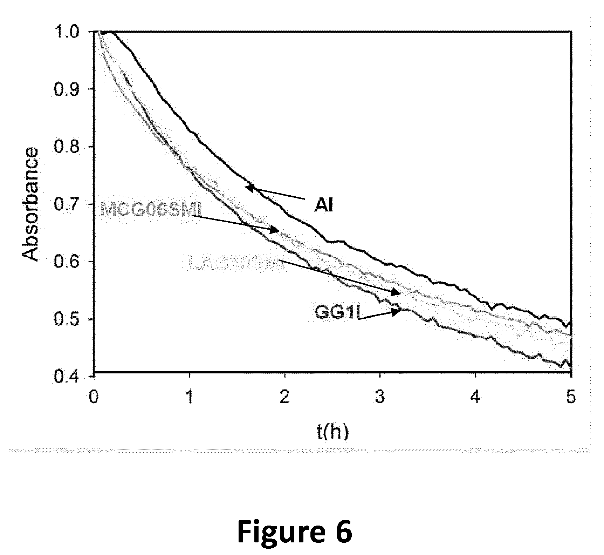

Figure 6 presents graphs demonstrating the photodegradation of Rhodamine B, while focusing on the first 5-hour irradiation time of the Rhodamine B photodegradation on the top of cementitious coatings made with photocatalytic additives: $TiO_2$(AHP200), GG1, MCG06S and LAG10S (as described below), showing that the presence of graphene inside the photocatalyst fastens the initial photodegradation of pollutants.

DETAILED DESCRIPTION OF THE INVENTION

Before explaining at least one embodiment of the invention in detail, it is to be understood that the invention is not necessarily limited in its application to the details set forth in the following description or exemplified by the Examples. The invention is capable of other embodiments or of being practiced or carried out in various ways.

As demonstrated in the Examples section that follows, the present inventors have successfully produced photocatalytic composition based on a photocatalyst (e.g., titanium dioxide) and a graphenic material having high and efficient photocatalytic action which, e.g., exceeds that of titanium dioxide.

Embodiments of the present invention therefore relate to compositions-of-matter comprising, a photocatalyst and a graphenic material.

***The compositions-of-matter:***

According to an aspect of some embodiments of the present invention there is provided a composition-of-matter comprising a photocatalyst and a graphenic material.

In some embodiments, the composition-of-matter further comprises a substrate.

In some embodiments, the photocatalyst, and the graphenic material are incorporated in and/or on at least a portion of the substrate.

In some embodiments, the substrate is a hydraulic binder. In some embodiments, the substrate is paint. In some embodiments, the substrate is a render. In some embodiments, the substrate is a plaster. In some embodiments, the substrate is cementitious composition. In some embodiments, the substrate is a hydraulic lime. In some embodiments, the substrate is or comprises gypsum. In some embodiments the substrate comprises a rheology modifier.

In some embodiments, the term "rheology modifier" refers to a material that, when added to the pretreatment composition, produces a thickened composition e.g., having a highly shear thinning, and/or thixotropic rheology.

Non-limiting example of rheology modifier is cellulose.

In some embodiments, the cementitious composition is selected from the group consisting of a paste, a mortar and a concrete.

In some embodiments, the photocatalyst is titanium dioxide ($TiO_2$).

In some embodiments, the total concentration (w/w; by total weight of the photocatalyst and the graphenic material is graphene and/or graphite) of the photocatalyst (e.g., $TiO_2$) is from 80% to 99.9%. In some embodiments, the total concentration (w/w; by total weight of the photocatalyst and the graphenic material) of the photocatalyst is from 80% to 99%. In some embodiments, the total concentration (w/w; by total weight of the photocatalyst and the graphenic material) of the photocatalyst is from 85% to 99%. In some embodiments, the total concentration (w/w; by total weight of the photocatalyst and the graphenic material) of the photocatalyst is from 90% to 99%. In some embodiments, the total concentration (w/w; by total weight of the photocatalyst and the graphenic material) of the photocatalyst is from 91% to 98%. In some embodiments, the total concentration (w/w; by total weight of the photocatalyst and the graphenic material) of the photocatalyst is at least 80%, 85%, 90%, 95%, or 99.9%, including any value or range therebetween. In some embodiments, the total concentration (w/w; by total weight of the photocatalyst and the graphenic material) of the photocatalyst (e.g., $TiO_2$) is from 80% to 99.9%.

In some embodiments, the total concentration (w/w; by total weight of the photocatalyst and the graphenic material) of the photocatalyst is from 40% to 90%, including any value or range therebetween.

In some embodiments, the total concentration (w/w; by total weight of the photocatalyst and the graphenic material) of the graphenic material (e.g., graphene and/or graphite) is from 1% to 20%. In some embodiments, the total concentration (w/w; by total weight of the photocatalyst and the graphenic material) of the graphenic material is from 1% to 15%. In some embodiments, the total concentration (w/w; by total weight of the photocatalyst and the graphenic material) of the graphenic material is from 2% to 9%.

In some embodiments, the total concentration (w/w; by total weight of the photocatalyst and the graphenic material) of the graphenic material (e.g., graphene such as G2Nan as described below) is at most 0.01%, 5%, 10%, 15%, or 20%, including any value or range therebetween. In some embodiments the total concentration (w/w, by total weight of the photocatalyst and the graphenic material) of the graphenic material when it is graphite, is at most 10%, 40%, 50%, 60% including any value or range therebetween.

In some embodiments, the each of the graphenic material and the photocatalyst is at most 0.01%, 5%, 10%, 15%, or 20%, including any value or range therebetween.

In some embodiments, the composition further comprises a matrix. In some embodiments, the matrix comprises a cement or concrete.

In some embodiments, the cement further comprises carbonate minerals.

The compositions provided herein meet the durability, strength and availability, bending and axial load, shear and torsion as well as the rest of the Structural Concrete Building Code (for example, as ACI318-08 and ACI201.2R-01 Requirements).

In some embodiments, the titanium oxide and/or the graphenic material are randomly distributed in the matrix. In some embodiments, the titanium oxide and/or the graphenic material are randomly distributed in the matrix on the surface of the matrix.

In some embodiments, the titanium oxide and/or the graphenic material are in the form of powder or a plurality of particles.

In some embodiments, the photocatalyst (e.g., titanium dioxide) is distributed in the whole mass of the premix of the cement compositions and of the resulting finished items.

In some embodiments, the photocatalyst is uniformly distributed in the substrate in inner layers and on the outer surface thereof.

In some embodiments, the cement compositions of the invention are obtained by addition of water to the components of the premixes. Typically, but not exclusively, a water/binder ratio in the range between 0.3 and 0.7 is used where the binder is intended to be the hydraulic binder in the composition.

Cementitious compositions, obtained through adding water to the aforesaid premixed products, may include, without limitation, both cement pastes, and mixes composed of binder and water with no aggregate, or, in some embodiments, conglomerates, or mixes composed of water, binder and aggregate. The "aggregate" or "inerts" or "inert aggregate", are synonyms and may be classified in the UNI EN 206 standard. These can be fine aggregate such as sand, or coarse aggregate.

Non-limiting conglomerate examples include mortars (e.g., mixes composed of binder as described below, water and fine aggregates), and cement mixes (e.g., mixes composed of water, binder, fine aggregate and coarse aggregate). The amount of aggregate, the water/cement ratio and the mixing method used to form cementitious compositions are those used conventionally in this sector.

In some embodiments, the surface of the matrix is roughened e.g., so as to increase the specific surface in contact with the air.

In some embodiments, the amount of titanium oxide as compared to the cement may vary from 0.1 % to 10% by weight. In some embodiments, the range is between 2% and 5%. In some embodiments, the range is between 3% and 4% in weight as compared to the cement.

In some embodiments, the photocatalyst and the graphenic material act in synergy.

As exemplified herein, the findings that photocatalyst (e.g., $TiO_2$) and the graphenic material act in synergy, allow utilizing a composition that contains reduced concentrations of each agent (i.e. photocatalyst (e.g., $TiO_2$) and graphenic material) as compared to the concentration of each agent that is typically utilized for exerting photocatalytic activity, while still obtaining the desired photocatalytic activity.

*Hydraulic **Binder***

Hereinthroughout, the term "binder" or "hydraulic binder" indicates a dry, solid state powder material which upon mixing with water, provides plastic mixtures which may dry and harden.

In some embodiments, cement (white, gray or pigmented cements) is defined according to UNI EN 197.1 standard.

In some embodiments, hydraulic material comprises at least two thirds, by weight, of calcium silicates ($3CaO \cdot SiO_2$) and ($2CaO \cdot SiO_2$). In some embodiments, the remaining part comprises $Al_2O_3$, $Fe_2O_3$ and/or other oxides.

In some embodiments hydraulic lime is used.

**The Photocatalyst**

In some embodiments, the term "photocatalyst" may refer to a material having an efficient photocatalytic activity. In some embodiments, the term "photocatalytic" refers to the properties of the product in question which, in the presence of light, air, and/or environmental humidity (i.e. comprising oxygen and water) are able to catalyze a decomposition reaction of one or more environmentally polluting substances (also referred to as: "pollutant").

In some embodiments, the term "photocatalytic activity" refers to the capacity to obtain the abatement of contaminants under solar-simulating radiation. In some embodiments, the activity is conventionally measured as % $NO_x$ conversion according to standards known in the art e.g., UNI 11247.

In some embodiments, the term "efficient photocatalytic" refers to the capacity to obtain, comparatively, a higher abatement of contaminants under solar-simulating radiation (conventionally measured as % NO conversion, according to UNI 11247) with respect to a conventional $TiO_2$.

Reference is made to Figures 5 and 6 which present the results of the photodegradation test on the lime coating (Figure 5) and for cementitious coatings (Figure 6), as further described in the Examples section below.

In some embodiments, any kind of photocatalyst able to oxidize the polluting substances contacting the surface of the hydraulic binder (or of the relative mortars and concretes).

In some embodiments, the photocatalyst is metal oxide, e.g zinc oxide. In some embodiments, the photocatalyst comprises a mixture of two or more metal oxides.

### Titanium Dioxide

The term "titanium dioxide" ($TiO_2$) means titanium dioxide or a precursor thereof.

In some embodiments, the titanium dioxide is mainly in the form of anatase. As known in the art, $TiO_2$ crystallizes into the tetragonal forms of anatase and rutile. The rutile is the most stable form.

In some embodiments, the term "titanium dioxide mainly in the form of anatase" may refer to particles of titanium dioxide ($TiO_2$) having anatase structure (i.e. a crystallographic form) for at least 5%, for at least 25%, for at least 50%, or for at least 70%, by weight. In some embodiments, a mixture of anatase and rutile is used. For example, a mixture 70:30 of anatase and rutile may be used.

In some embodiments, $TiO_2$ is in the form of a powder or particles.

In some embodiments, the $TiO_2$ particle is characterized by a defined specific surface area value, as measure by a method known in the art, e.g., by Brunauer-Emmett-Teller (BET) method.

In some embodiments, the specific surface area is within the range between 10 and 450 $m^2$/g, between 50 and 450 $m^2$/g, between 150 and 300 $m^2$/g. e.g. In some embodiments, the specific surface area is about 200 $m^2$/g.

In some embodiments, $TiO_2$ is doped with other atoms different from Ti.

For example, $TiO_2$ matrices may be doped with suitable atoms (also referred to as: "dopant") such as, without limitation, Fe(III), Mo(V), Ru(III), Os(III), Re(V), V(IV) and Rh(III).

By "titanium dioxide precursor" it is meant to refer to precursors selected from, without being limited thereto, $TiCl_4$, $Ti(OH)_4$, or $TiOSO_4$, or other precursors known in the art.

For example the so called "titanium paste" may be considered a valid precursor for the titanium dioxide based photocatalyst of the present invention.

The titanium paste ($TiO_2 \cdot H_2O$) is derived from the treatment of the product $TiOSO_4$ with water and it may be effectively used as an anatase precursor without a particular thermal treatment.

### The Graphenic Material

In some embodiments, the term "graphenic material" (synonymously, "graphenic mixture" or "graphenic composition") refers to a material that comprises at least one or more species of: "pure", single-layer, two-layer or/and few-layer graphene and displays one or more properties associated with graphene.

In some embodiments, by "properties associated with graphene" it is meant to refer to one or more properties of graphene being exhibited in the bulk of the material.

In some embodiments, "graphenic material" and its synonyms encompasses compositions comprising no/any/all modifications such as CM- and NCM-modifications , as well as wrinkled, ribboned, natural and synthetic forms, intercalated and non-intercalated, chemically-functionalized graphene, etc.

In some embodiments, the term "graphene" is defined as a one-atom-thick sheet of $sp^2$ bonded carbon atoms that are densely packed in a honeycomb crystal lattice.

In some embodiments, the "graphenic material" may be graphite free or essentially graphite free.

In some embodiments, these mixtures may also contain varying amounts of graphite.

In some embodiments, the term "graphite" refers to any form of graphite, including without limitation, natural and synthetic forms of graphite, including, for example, crystalline graphites, expanded graphites, exfoliated graphites, and graphite flakes, sheets, powders, fibers, pure graphite, and graphite.

Additional non-limiting examples of graphenic materials are selected from single and multi-layer graphene, graphite nanoplatelets, graphite nanosheets, graphite nanoflakes, graphene nanosheets, graphene microsheet, graphene nanoribbon, and reduced graphene.

In some embodiments, when graphite is present, one or more graphitic carbons can have the characteristics of a carbon in an ordered three-dimensional graphite crystalline structure comprising layers of hexagonally arranged carbon atoms stacked parallel to each other.

A graphitic carbon may be any carbon present in an allotropic form of graphite, whether or not the graphite has structural defects.

In exemplary embodiments, the graphenic material is in the form of graphite nanoplatelets particles (e.g., from Nanesa (G2Nan)). Graphite nanoplatelets particles that are 2D graphite materials with the basal plane identical in structure to graphene and a nanosized thickness and/or lateral dimension.

By "nanosized thickness and/or lateral dimension" it is meant to refer to a size which is less than 100 nm. In yet further embodiments, the size is less than 90 nm. In some embodiments, the size is less than 80 nm. In some embodiments, the size is less than 70 nm. In some embodiments, the size is less than 60 nm. In some embodiments, the size is less than 50 nm. In some embodiments, the size is less than 40 nm. In some embodiments, the size is less than 30 nm. In some embodiments, the size is less than 20 nm. In some embodiments, the size is less than 10 nm.

Without being bound by any particular theory or mechanism, the smaller (nanosized) dimension may allow to increase the efficacy of the photocatalyst to oxidize the polluting substances contacting the surface of the hydraulic binder or of the relative mortars and concretes.

Several production techniques are available for the fabrication of "graphene".

In some embodiments, the production technique includes graphite micromechanical cleavage obtained by scotch tape or peel-off method.

In some embodiments, the production technique includes a graphene film growth by chemical vapor deposition (CVD) on selected substrates (e.g., Ni, Cu). In some embodiments, the CVD includes a precursor pyrolysis of a material to form carbon, and thereafter the formation of the structure of graphene by the dissociated carbon atoms. Further exemplary processes may be low pressure (LPCVD) and the ultra-high vacuum (UHVCVD) process.

In some embodiments, the production technique includes graphite exfoliation e.g., by electrochemical methods with the use of suitable electrolytes such as, without limitation, alkaline compounds, and strong acid solutions.

In some embodiments, the production technique includes graphite exfoliation by ball milling in the presence of suitable chemicals such as, without limitation, melamine, DMF.

In some embodiments, the production technique includes graphite exfoliation by high shear mixers in the presence of suitable chemicals such as, without limitation, NMP solvent, and sodium cholate.

In some embodiments, the production technique includes graphite exfoliation by external heating source such as, without limitation, flame, infrared, microwaves, and laser sources. This may include the possibility of intercalation of graphite with suitable chemicals such as oligomeric ionic liquids.

In some embodiments, the production technique includes graphite exfoliation by an internal heating method such as, without limitation, passing an electrical current through intercalated graphite.

In some embodiments, the production technique includes graphite oxide reduction by chemical or thermal treatment so as to decrease the oxidation state of graphene and reestablish electrical and thermal conductivity as close as possible to pristine graphene. This technique may include possible treatments with hydrazine as well as dehydration.

In some embodiments, the production technique includes graphite exfoliation by sonication in liquid environments (LPE).

In some embodiments, LPE is surfactant-free.

In some embodiments, surfactant-free LPE is a solvent such as, without being limited thereto, N,N-dimethylformamide (DMF), N-methyl-2-pyrrolidone (NMP), orto-dichlorobenzene (ODB), perfluorinated aromatic compounds.

In some embodiments, LPE is a surfactant assisted aqueous solution.

In some embodiments, surfactant assisted aqueous solution may include pyrene derivatives or surface stabilizers such as, without limitation, sodium cholate, sodium dodecyl benzene, and 9-anthracene carboxylic acid.

In some embodiments, LPE is surfactant assisted organic dispersions such as, without limitation, porphyrins in NMP containing organic ammonium ions.

In some embodiments, LPE is polymer assisted aqueous or organic solvent such as, without limitation, ethyl cellulose (EC), polyvinylpirrolidone (PVP), polybutadiene (PB, polystyrene (PS).

### The Articles

The disclosed compositions may be used in various manners e.g., to protect a surface with a layer of photocatalytic material.

In some embodiments, there is provided an article (also referred to as "product") comprising the disclosed composition.

In some embodiments, the disclosed photocatalytic article is a cement product. In some embodiments, the cement product is selected from, without being limited thereto, architectural elements, paving blocks, road surfacing products, tunnel or garage ceiling vaults, paving stones, blocks, bricks, paint, plaster finish, render, monumental elements, extruded products, and tiles, prepared using the cement mix.

In some embodiments, the disclosed photocatalytic article is a non-cement paint product such as silicatic paint finishes with potassium, siloxanic or acrylic silicates.

### Methods for Reduction of Pollutants

In some embodiments, there is provided a method for the reduction of pollutants present in the environment, characterized by the contact with the environment, in the presence of light and air, e.g., with one or more products as described herein.

In some embodiments, the method comprises preparing the aforesaid composition.

In some embodiments, the method comprises a contact between the matrix (e.g. concrete) and $TiO_2$ or one of its precursors (e.g., $TiCl_4$, $Ti(OH)_4$ or $TiOSO_4$, or other precursors known to prior art).

In some embodiments, the term "environmentally polluting substances" indicates inorganic and organic substances which may be present in the environment due to exhaust gases from engines or industrial emissions. Non-limiting examples of these pollutants include benzene, volatile aromatic compounds, pesticides, organic aromatic compounds, benzofluorides aromatic polycondensates, aldehydes, PM10 concentration soot, nitrogen oxides ($NO_x$) and sulphur oxides ($SO_x$).

In some embodiments, photocatalytic cementitious products produced using the disclosed composition are able to reduce both organic and inorganic pollutants present in the environment.

In some embodiments, the reduction of pollutants is carried out in the presence of UV light and/or water.

In some embodiments, nitrogen oxides e.g., NO and $NO_x$ may be oxidized to nitrates.

**General:**

As used herein the term "about" refers to $\pm$ 10 %.

The terms "comprises", "comprising", "includes", "including", "having" and their conjugates mean "including but not limited to".

The term "consisting of means "including and limited to".

The term "consisting essentially of" means that the composition, method or structure may include additional ingredients, steps and/or parts, but only if the additional ingredients, steps and/or parts do not materially alter the basic and novel characteristics of the claimed composition, method or structure.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the invention may include a plurality of "optional" features unless such features conflict.

As used herein, the singular form "a", "an" and "the" include plural references unless the context clearly dictates otherwise. For example, the term "a compound" or "at least one compound" may include a plurality of compounds, including mixtures thereof.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

As used herein the term "method" refers to manners, means, techniques and procedures for accomplishing a given task including, but not limited to, those manners, means, techniques and procedures either known to, or readily developed from known manners, means, techniques and procedures by practitioners of the chemical arts.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

Various embodiments and aspects of the present invention as delineated hereinabove and as claimed in the claims section below find experimental support in the following examples.

**EXAMPLES**

Reference is now made to the following examples, which together with the above descriptions illustrate some embodiments of the invention in a non-limiting fashion.

**EXAMPLE 1**

**NOx abatement: recirculation vs. gas flow method**

The photocatalytic activity of $TiO_2$ photocatalyst incorporated cement based materials evaluated by $NO_x$ abatement adopting the recirculation procedure. The gas flow method is compared using the apparatus reported in the Italian standard UNI 11247.

In exemplary procedures, the sample to be investigated was collocated inside a reaction chamber (3 liters) containing a UV lamp such that, at the specimen level, having a UV ($\lambda$<400 nm) in-band irradiance spectrum composed mainly of the 365 nm line of mercury (according the standard UNI 11247 irradiance integrated at $\lambda$ <350 nm is forecast to be 10% lower than the irradiance integrated between 350 and 400 nm).

The irradiation system provides for an average irradiance (in UV-A band) of $(20\pm1)$ W/m$^2$ on the specimen surface (64cm$^2$) during the test.

In the standardized continuous flow procedure according to UNI 11247, that is a "dynamic" continuous flow method, the flow of polluted air containing 0.55ppm of $NO_x$ (of which $NO_2$=0.15ppm and NO=0.4ppm) was constant (1.5 liter/min). The first phase of the test was in dark conditions and it was necessary to equalize the adsorption processes and to achieve a constant gas flow and $NO_x$ concentration ($C_B$).

In the second phase the lamp was switched on and the system was allowed to equalize for a certain time to reach an equilibrium gas concentration ($C_L$). In the "gas recirculation" procedure, that is a "static" method, a certain volume of air is compelled to recirculate during the experiment with no air exchange over time. As in the gas flow procedure $C_B$ and $C_L$ are registered in the dark and light phases respectively. The difference between the $NO_x$ concentration measured in the dark and the light phase allows to calculate the $A_c$ index of the photocatalytic abatement, as follows:

$$A_c = 100x \ [(C_B-C_L)/C_B] \ x \ (I_N/I_{IR}) \ x \ (S_N/S_A)$$

where:

$A_C$ = photocatalytic adimensional abatement index under test conditions (%).
$C_B$ = $NO_x$ equilibrium concentration at the reactor's exit in dark conditions (ppb).
$C_L$ = $NO_x$ equilibrium concentration at the reactor's exit under radiation (ppb).
$I_{IR}$ = average irradiance as measured and corrected (W m$^{-2}$).
IN = nominal irradiance (20 W m$^{-2}$).
$S_A$= surface area of the specimen as measured ($64\pm6$ cm$^2$).
$S_N$ = nominal surface area of the specimen (64 cm$^2$).

The fresh cementitious mixture was mortar prepared according to the standard UNI EN 196-1 and replacing part of the cement with the photocatalyst as shown in the Table 1 below showing the photocatalytic mortar composition.

**Table 1**

| Component | Name | Composition |
|---|---|---|
| White cement | i.design Italbianco 52.5R | 1 part (comprising $TiO_2$) |
| $TiO_2$ | Hombikat AHP200 | 1.5%, 3% by weight of cement |
| Sand | According to EN196 | 3 parts |
| Water/cement | Town water supply | 0.5 |

In exemplary procedures, the fresh mortar was poured in the lid of a Petri capsule and maintained in a conditioned room at 20°C and 90% RH for 7 days. Then the sample was left at 20°C and 60%RH for all the time before the measurement.

Table 2 presents $A_c$ typical values with different procedures.

Table 2

| Procedure | Ac (%) | |
|---|---|---|
| | ½ hour | 1 hour |
| Gas recirculation | >70 | >80 |
| Continuous gas flow | <40 | <40 |

**EXAMPLE 2**

**Photocatalyst Preparation**

In exemplary procedures, the photocatalysts were prepared according to three different methods based on: blender, ball milling and sonication apparatuses, coded as LAG, MCG and GG, respectively.
All the codes used in the following paragraphs are listed in the Table 3 below.

Table 3

| Name | Code |
|---|---|
| i.design Italbianco | I |
| i.pro chaux pure NHL5 | C |
| $TiO_2$ | A |
| G2Nan | G |
| Graphite flakes | F |
| MHE cellulose | M |
| Sonication | S |
| Photocatalyst by blending | LAGi (i=2,5,10) |
| Photocatalyst by milling | MCG06 |
| Photocatalyst by exfoliation | GG1 |

**Blender method**

**Ingredients**

The ingredients are listed in the Table 4 below showing components of the photocatalyst in the "blender method".

**Table 4**

| Component | Supplier | Code | Form | Active (%) | SSA (m²/g) | Avg. Size a. Flake thickness b. Particle size | Bulk density (g/cm³) |
|---|---|---|---|---|---|---|---|
| Titanium dioxide | Sachtleben Chemie | AHP200 | Powder Mainly Anatase | TiO$_2$>90 | 160-240 | ----------------- | 0.541 |
| Gaphite nanoplatelets | Nanesa | G2 Nan | Paste | C>98 | >30 | a.~10nm b.5-50 $\mu$m | 0.042-0.020 |
| Surfactant | BASF | Pluronic P123 | Paste | --------------- | ----------------- | M~5750 | --------------- |

**Preparation**

In exemplary procedures, the photocatalysts were prepared by adding G2Nan paste (4% dry matter) and $TiO_2$ powder to water to produce an aqueous slurry with $TiO_2$/G2Nan dry matter ratio as in Table 5 below, showing the photocatalyst obtained by "blender method".

**Table 5**

| Photocatalyst | $TiO_2$/G2Nan(w/w) dry matter |
|---|---|
| LAG2 | 98/2 |
| LAG5 | 95/5 |
| LAG10 | 91/9 |
| LAG10S | 91/9 |

The paste was then mixed in the laboratory blender at 11000 rpm for 40 min and the product was dried at 60°C. The obtained dry product was thereafter mixed for 20 s by the laboratory blender. For the S sample the dispersion was next sonicated for 4 hours in 2-propanol, the product was dried at 60°C, and was finally mixed for 20 s by the laboratory blender.

**Milling method**

**Ingredients**

The ingredients are listed in the Table 6 below showing the components of the photocatalyst in the "milling method".

**Table 6**

| Component | Supplier | Code | Form | Active (%) | Note |
|---|---|---|---|---|---|
| Titanium | Sachtleben | AHP200 | Powder | $TiO_2$>90 | SSA: 160-240 $m^2$/g |
| dioxide | Chemie | | Mainly Anatase | | Avg. Size (+100 mesh): 98.4% Bulk density (g/$cm^3$): 0.541 |
| Gaphite flakes | Sigma-Aldrich | 332461 | Flakes | | Avg. Size (+100 mesh): 75% min. |
| Additive 1 | Alfa Aesar | Melamine A11295 | Powder | >99% | ------------ |

Melamine was introduced in the ball mill to promote graphite exfoliation according to literature (ACS Nano, 2014, vol.8, N.1, 563-571, Chem.Comm., 2011, 47,10936-10938).

**Preparation**

In exemplary procedures, the photocatalysts MCG06 and MCG06S were prepared as follows:

A composition (15g) of the ingredients was introduced as in Table 7 below in a Zircomiun jar (250ml) containing Zirconium balls ranging from 5 to 20 mm (n°10 of $\varphi$5mm+n°15 of $\varphi$10mm+n°6 of $\varphi$20mm).

The composition was next milled in a planetary mill for enough long time and rotational speed to forecast partial graphite exfoliation according to the literature (Chem. Comm., 2011, 47,10936-10938), 1 cycle-at 150 rpm for 45 minutes.
Only for S samples the photocatalyst (7 g) was then mixed with 2-propanol (100 ml) for 10 min. The dispersion was thereafter sonicated for 4 hours and was then dried at 60°C.The product was then milled in a centrifugal mill at 150 rpm for 45 minutes.
Table 7 presents photocatalyst obtained by "milling method".

Table 7

| Photocatalyst | AHP200 1.5% | Graphite flakes (%)* | Additive (% w/w) | |
|---|---|---|---|---|
| TiO$_2$ | 100(milled with melamine) | 0 | 0 | 0 |
| Graphite Flakes | 0 | 100 (milled with melamine) | 0 | 0 |
| MCG06 | 33 | 33 | Melamine | 33 |
| MCG06S | 33 | 33 | Melamine | 33 |

**Sonication exfoliation method**

**Ingredients**

The ingredients are listed in the Table 8, presenting components of the photocatalyst in the "sonication exfoliation method".

#### Table 8

| Component | Supplier | Code | Form | Active(%) | SSA (m²/g) | Avg. Size a.Flake thickness b.Particle size | Bulk density (g/cm³) |
|---|---|---|---|---|---|---|---|
| Titanium dioxide | Sachtleben Chemie | AHP200 | Powder Mainly | $TiO_2$>90 | 160-240 | --------------- | 0.541 |
|  |  |  | Anatase |  |  |  |  |
| Gaphite flakes | Sigma-Aldrich | 332461 | Flakes | ----------------- | ---------------- | a.------------- b.+100 mesh | ----------------- |

**Preparation**

The photocatalyst GG1 was prepared by a sonication process as follows:

In a typical preparation, 3 mg of graphite flakes (Sigma) and 30 mg of $TiO_2$ nanoparticles were dispersed in ultrapure water (15 ml). The mixture was treated by direct ultrasonication for 4 hours at 40°C. In other preparations the same amounts of graphite and $TiO_2$ were dispersed in a different volume of ultrapure water, for example 2, 5 or 30 ml.

**EXAMPLE 3**

**Photocatalytic Activity in Mortar**

**Mortar preparation**

The fresh cementitious mixture is mortar prepared according to the procedure described in the standard UNI EN 196-1 and replacing part of the cement with the photocatalyst as shown in the Table 1.

In exemplary procedures, the fresh mortar was poured into the lid of a Petri capsule and maintained in a conditioned room at 20°C and 90% relative humidity (RH) for 7 days.

Then the sample was left at 20°C and 60% RH for all the time before the measurement.

In additional exemplary procedures, the fresh cementitious mixture was mortar prepared with hydraulic lime i.pro chaux pure NHL5 (instead of white cement i.design Italbianco 52.5R) according to the procedure described in the standard UNI EN 196-1 and replacing part of the hydraulic lime with the photocatalyst, as shown in the Table 9 showing components of mortar.

**Table 9**

| Component | Name | Composition | Note |
|---|---|---|---|
| White cement | i.design Italbianco 52.5R | 1 part (comprising $TiO_2$) | |
| Hydraulic lime | i.pro chaux pure NHL5 | 1 part (comprising $TiO_2$) | As alternative binder |
| $TiO_2$ | Hombikat AHP200 | 1.5%, 3% by weight of cement | |
| MHE cellulose | Tylose MH15000 YP4 | 0.36% by weight of cement | Only in some mixtures |
| Sand | According to EN196 | 3 parts | |
| Water/cement | Town water supply | 0.5 | |

***Mortar Intimate Structure Characterization***

Micro Raman analysis performed on the LAG10S-incorporated cement and lime pastes (ca. 1mm thickness) shows a spectrum that corresponds to a few- layered graphene (Figure 1). Graphene mapping on the area of about 100 square microns shows the distribution of graphene over the analyzed area and presented in grey (Figure 2). High Resolution Scanning Electron Microscope (HR-SEM) images of LAG 10S -incorporated cement and lime samples and taken in the phase contrast mode also reveal the presence of graphene areas on the surface of the samples. That Graphene areas are clearly observed utilizing in-lens detector due to their different distinctive morphology as compared to the cement matrix (Figure 3). Moreover, employing the energy selective backscattered (EsB) detector allowed observation of the compositional contrast between graphene and cement matrix. Dark regions derived from the lower matrix both morphologically and their Z-contrast atomic number of graphene as compared to the cement matrix confirm its presence within the samples. The same is visible within the lime matrix (Figure 4).

**Photocatalytic Performance**

**Results with photocatalyst obtained by the "blender method":**

Table 10 below summarizes the results on cement mortar with photocatalysts obtained by the "blender method".

**Table 10**

| Mortar sample | Photocatalyzer 3%TiO$_2$ | Binder | R$_{Ac}$ (%) (Ac $_{sample}$/AC $_{reference}$) |
|---|---|---|---|
| AI3 | TiO$_2$ | | 1.00 |
| GI | G2Nan | | 0.00 |
| LAG2I | LAG2 | | 1.11 |
| LAG5I | LAG5 | Italbianco 52.5R | 1.14 |
| LAG10I | LAG10 | | 1.17 |
| LAG10SI | LAG10S | | 1.23 |
| LAG10SMI | LAG10S | | 1.24 |

Table 11 below summarizes the results on lime mortar with photocatalysts obtained by the "blender method".

**Table 11**

| Mortar sample | Photocatalyzer 3%TiO2 | Binder | R$_{Ac}$ (%) (Ac $_{sample}$/Ac $_{reference}$) |
|---|---|---|---|
| AC3 | TiO2 | | 1.0 |
| LAG10MC | LAG10M | Hydraulic lime | 1.15 |
| LAG10SC | LAG10S | | 1.42 |
| LAG10SMC | LAG10SM | | 1.40 |

**Results with photocatalyst obtained by the "milling method".**

Table 12 below summarizes the results obtained on cement mortar with photocatalyst obtained by the "milling method".

**Table 12**

| Mortar sample | Photocatalyzer 3% | Binder | R$_{Ac}$ (%) (Ac $_{sample}$/Ac $_{reference}$) |
|---|---|---|---|
| AI1.5 | TiO$_2$ (milled with melamine) | | 1.00 |
| FI1.5 | Graphite Flakes (milled with melamine) | Italbianco 52.5R | 0.00 |
| MCG06SI | MCG06S | | 1.21 |
| MCG06MI | MCG06M | | 1.18 |
| MCG06SMI | MCG06SM | | 1.22 |

**Results with photocatalyst obtained by the "sonication method"**

Table 13 below summarizes results on cement mortar with photocatalyst obtained by the "sonication method".

**Table 13**

| Mortar sample | Photocatalyzer 3% | Binder | R$_{Ac}$ (%) (Ac $_{sample}$/Ac $_{reference}$) |
|---|---|---|---|
| AI | TiO$_2$ | Italbianco 52.5R | 1.00 |
| GG1I | GG1 | | 1.13 |

Table 14 below summarizes the results on lime mortar with photocatalysts obtained by the "sonication method".

**Table 14**

| Mortar sample | Photocatalyzer 3% | Binder | $R_{Ac}$ (%) ($Ac_{sample}/Ac_{reference}$) |
|---|---|---|---|
| AC | $TiO_2$ | Hydraulic lime | 1.00 |
| GG1C | GG1 | | 1.14 |

**Real-time Self-cleaning Tests**

In exemplary procedures, the self-cleaning performances of hardened hydraulic lime-based samples (3 mm thickness) doped with the different photocatalysts were investigated, in real-time, under continuous light irradiation according to the following procedure.

***Procedure for real-time photodegradation (self-cleaning) tests:***

In exemplary procedures, the photoactive samples were stained with a dye solution. After drying, the stains on the samples surfaces were observed with a color camera during the irradiation with a light source. The images were acquired on a PC and processed to calculate the fraction of light adsorbed by the stain during the irradiation.

*Staining process:* in exemplary procedures, a volume of 0.050 ml of an ethanol solution of Rhodamine B (0.25g/L) was dropped on the top of the surface of the photoactive sample. Self-cleaning tests were performed on dried samples (30 minutes after dye solution deposition at 25 °C, atmospheric pressure).

*Photodegradation test:* in exemplary procedures, the set-up used for the photodegration test consisted in an irradiation lamp, a sample holder, and a Cmos Color Camera equipped with a 14 mm objective.

In exemplary procedures, all the measurements were performed in the same conditions in particular as follows.

The sample was kept horizontal with the active face upward. The lamp (Mercury lamp Radium Sanolux HRC 300-280 E27 lamp) was positioned on the top of the sample at 40 cm from its surface. The emission cone of the lamp was directed downward with the axis of the emission cone vertical and directed toward the rhodamine stains. The camera was positioned at 45 cm at an angle of 10° with respect to the lamp axis. The camera was oriented to point at the intersection of the lamp emission axis with the sample surface. The stain image was focused manually. The acquisition parameters of the camera were set manually and kept unchanged during all the experiments.

After the samples were positioned under the irradiation lamp the discoloration was monitored acquiring images (one frame every 20 seconds) of the sample under continuous irradiation at 25 °C for 24 h. For the quantitative analysis, the images were recorded and processed to calculate the average intensity per pixel (I) across the stained region.

In particular, the average intensity (I) was measured in the same sample area and with the same irradiation set up, before staining ($I_0$) and after staining, as a function the time, during irradiation time ($I_t$). Absorbance due to the stain was measured as $A_t = \log(I_0/I_t)$.

Images acquisition and processing was performed with the softwares IC Capture 2.3 and ImageJ.

**Results**

***Results for lime coatings***

Figure 5 presents the results of the photodegradation test.

In particular, the absorbance At was measured as a function of time for the different photo-catalysts. The photodegradation rate of rhodamine on the top surface was greatly influenced by the nature of the photocatalytic additive. Specifically, as a quantitative parameter of the rate of photodegradation, the half-time $t_{1/2}$, defined as the irradiation time after which the value of absorbance At is equal to the half of the initial absorbance value $A_0$, is calculated. According to this parameter, the hydraulic lime (C) samples MCG06SMC and LAG10SMC showed a faster photodegradation kinetics with respect to the control sample AC incorporating only the $TiO_2$. In particular the half time $t_{1/2}$ was reduced by a factor of: 1.60 (for GG1), 2.11 (for MCG06SMC) and 3.17 (for LAG10SMC) with respect to the control sample AC incorporating only the $TiO_2$.

Table 15 below presents the results for real-time photodegradation (self-cleaning) tests with hydraulic lime binder.

**Table 15**

| Mortar sample | Photocatalyzer | Binder | $R_{t1/2}$ ($t_{1/2\ sample}/t_{1/2}$ reference) |
|---|---|---|---|
| AC | $TiO_2$ | Hydraulic lime | 1.00 |
| GG1C | GG1 | | 1.60 |
| MCG06SMC | MCG06S | | 2.11 |
| LAG10SMC | LAG10S | | 3.17 |

*Results for cementitious coatings:*

The effect of the photocatalysts is shown in Figure 6. Within the first 5 hours of irradiation, the LAG10SMI and MCG06SMI showed a faster photodegradation of Rhodamine B respect to the reference AI ($TiO_2$). In particular, after 1 hour of irradiation the absorbance of rhodamine B on the top of cementitious GG1I, MCG06SMI and LAG10SMI is reduced by a factor of 1.10 in respect to the reference AI.

All publications, patents and patent applications mentioned in this specification are herein incorporated in their entirety by reference into the specification, to the same extent as if each individual publication, patent or patent application was specifically and individually indicated to be incorporated herein by reference. In addition, citation or identification of any reference in this application shall not be construed as an admission that such reference is available as prior art to the present invention. To the extent that section headings are used, they should not be construed as necessarily limiting.

**Claims**

1.    A composition comprising a photocatalyst, a graphenic material, and a substrate, wherein said photocatalyst, and said graphenic material are incorporated in and/or on at least a portion of said substrate, and wherein the substrate is or comprises one or more materials selected from the group consisting of: paint, render, plaster, cementitious composition, gypsum, rheology modifier, a hydraulic lime, and a hydraulic binder.

2.    The composition of claim 1, wherein said substrate is a cementitious composition.

3.    The composition of any one of claims 1 and 2, wherein said cementitious composition is selected from the group consisting of a paste, a mortar and a concrete.

4.    The composition of any one of claims 1 to 3, wherein said photocatalyst is metal oxide.

5.    The composition of claim 4, wherein said metal oxide is titanium oxide ($TiO_2$).

6.    The composition of claim 5, wherein at least 80% of said $TiO_2$ is in the crystallographic form of anatase.

7.    The composition of any one of claims 5 and 6, wherein said $TiO_2$ has a specific surface area are between 10 and 400 $m^2$/g.

8.    The composition of any one of claims 1 to 7, wherein each of said photocatalyst and a graphenic material are less than 10%, by total weight of said composition.

9.    The composition of any one of claims 1 to 8, wherein said graphenic material is selected from the group consisting of: single layer graphene, multi-layer graphene, graphite nanoplatelets, graphite nanosheets, graphite nanoflakes, graphene nanosheets, graphene microsheet, graphene nanoribbon, reduced graphene, and any combination thereof.

10.    The composition of any one of claims 1 to 9, wherein said graphenic material is from 1% to 20%, (w/w) by total weight of said graphenic material and said photocatalyst.

11.    The composition of any one of claims 1 to 9, wherein said photocatalyst is from 40% to 90%, (w/w) by total weight of said graphenic material and said photocatalyst.

**12.** A photocatalytic article comprising the composition of any one of claims 1 to 11.

**13.** The article of claim 12, being selected from the group consisting of architectural elements, paving blocks, road surfacing products, ceiling vaults, paving stones, blocks, bricks, monumental elements, extruded products, and tiles.

**14.** A method of photocatalytically decomposing an air pollutant, optionally nitrogen oxide ($NO_x$), said method comprising contacting said pollutant with a composition comprising a photocatalyst and a graphenic material, optionally carried out in the presence of UV light and/or water, optionally said photocatalyst is $TiO_2$.

**15.** The method of any one of claims 13 and 14, wherein said photocatalyst and said graphenic material act synergistically.

**Figure 1**

**Figure 2**

**In Lens**                                    **ESB (phase contrast)**

**Figure 3**

InLens

ESB (phase contrast)

**Figure 4**

**Figure 5**

**Figure 6**

Europäisches
Patentamt

European
Patent Office

Office européen
des brevets

## EUROPEAN SEARCH REPORT

Application Number

EP 16 15 9215

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 104 446 594 A (UNIV HENAN POLYTECHNIC) 25 March 2015 (2015-03-25) * claims 1-10 * * paragraphs [0005] - [0028] * ----- | 1-15 | INV. C04B28/04 C04B28/12 C04B41/50 |
| X | CN 105 062 180 A (UMBRELLA HAS YOU COVERED CHENGDU CO LTD) 18 November 2015 (2015-11-18) * claims 1,3 * ----- | 1-10, 12-15 | |
| X | WO 2013/096990 A1 (UNIV MONASH [AU]) 4 July 2013 (2013-07-04) * pages 2-5 * * page 9, lines 11-17 * ----- | 1-5,12, 13 | |
| X | CN 105 016 657 A (DONGGUAN UNIVERSAL CLASSIC NEW MATERIALS CO LTD) 4 November 2015 (2015-11-04) * claim 1 * ----- | 1-7,9, 11-15 | |
| X | CN 105 153 861 A (NINGBO SHENTAI DRY POWDER BUILDING MATERIAL CO LTD) 16 December 2015 (2015-12-16) * paragraphs [0005], [0037] * ----- | 1,4-8, 10,12, 14,15 | TECHNICAL FIELDS SEARCHED (IPC)  C04B |

The present search report has been drawn up for all claims

| Place of search | Date of completion of the search | Examiner |
|---|---|---|
| Munich | 17 August 2016 | Gattinger, Irene |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.................................................................
& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 16 15 9215

This annex lists the patent family members relating to the patent documents cited in the above-mentioned European search report.
The members are as contained in the European Patent Office EDP file on
The European Patent Office is in no way liable for these particulars which are merely given for the purpose of information.

17-08-2016

| Patent document cited in search report | | Publication date | Patent family member(s) | Publication date |
|---|---|---|---|---|
| CN 104446594 | A | 25-03-2015 | NONE | |
| CN 105062180 | A | 18-11-2015 | NONE | |
| WO 2013096990 | A1 | 04-07-2013 | NONE | |
| CN 105016657 | A | 04-11-2015 | NONE | |
| CN 105153861 | A | 16-12-2015 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009013338 A

- WO 2009080647 A

**Non-patent literature cited in the description**

- *ACS Nano,* 2014, vol. 8 (1), 563-571
- *Chem.Comm.,* 2011, vol. 47, 10936-10938

- *Chem. Comm.,* 2011, vol. 47, 10936-10938